# EUROPEAN PATENT APPLICATION

(11) **EP 4 773 367 A1**
(43) Date of publication of application: **08.07.2026**
(21) Application number: 25857927.5
(22) Date of filing: 06.08.2025
(51) Int. Cl.: H01M 50/211, H01M 50/183, H01M 50/178, H01M 50/502, H01M 50/569

(54) **BATTERY MODULE COMPRISING GUIDE UNIT FOR PREVENTING VENTING**

(30) Priority: 29.10.2024 KR 20240150165; 29.04.2025 KR 20250056070
(71) Applicant: LG ENERGY SOLUTION, LTD., Seoul 07335 (KR)
(72) Inventor: PARK, Yoon Woo, Daejeon 34122 (KR); BAE, Sang Hyun, Daejeon 34122 (KR)
(74) Representative: Goddar, Heinz J.
(86) International application number: PCT/KR2025/011848
(87) International publication number: WO 2026/095275

(57) **Abstract**

Disclosed is a battery module including a plurality of pouch-shaped battery cells, each of the pouch-shaped battery cells including an electrode assembly, a receiving portion configured to receive the electrode assembly, a terrace portion forming an edge of the receiving portion, and a sealed portion located outside the terrace portion, wherein a guide portion having a predetermined shape is interposed between the pouch-shaped battery cells, and one side of the guide portion is located so as to extend to the vicinity of the sealed portion.

## Description

### [Technical Field]

This application claims the benefit of priority to Korean Patent Application No. 10-2024-0150165 filed on October 29, 2023 and Korean Patent Application No. 10-2025-0056070 filed on April 29, 2025, the disclosure of which is incorporated herein by reference in its entirety.

The present invention relates to a battery module including a guide portion for venting prevention, and more particularly to a battery module including a guide portion capable of preventing or delaying venting of a sealed portion of a pouch-shaped battery cell when the pouch-shaped battery cell swells.

### [Background Art]

There are a lithium ion battery, a lithium polymer battery, a nickel-cadmium battery, a nickel-hydride battery, and a nickel-zinc battery as secondary batteries. In general, the operating voltage of a unit cell of the secondary battery is about 2.0 V to 5.0 V. When output voltage higher than the above operating voltage is required, a plurality of unit cells may be connected to each other in series to constitute a cell assembly. In consideration of output voltage and capacity, cell assemblies may be connected to each other in series and/or in parallel to constitute a battery module, and a battery pack may be manufactured using a plurality of battery modules.

Secondary batteries may be classified into a cylindrical battery, a prismatic battery, and a pouch-shaped battery based on the shape of a battery case. Among these batteries, the pouch-shaped battery, which can be stacked with a high degree of integration, has high energy density per unit weight, is inexpensive, and can be easily deformed, has attracted considerable attention. A pouch-shaped battery cell, which means a battery cell configured such that a battery case is made of a laminate sheet, has a structure in which an electrode assembly is mounted in the battery case.

The battery cell poses a risk in that gas is generated in the battery cell during use thereof, such as charging and discharging, whereby the battery case may swell and explode. Consequently, various technologies have been proposed to enhance the safety of pouch-shaped battery cells.

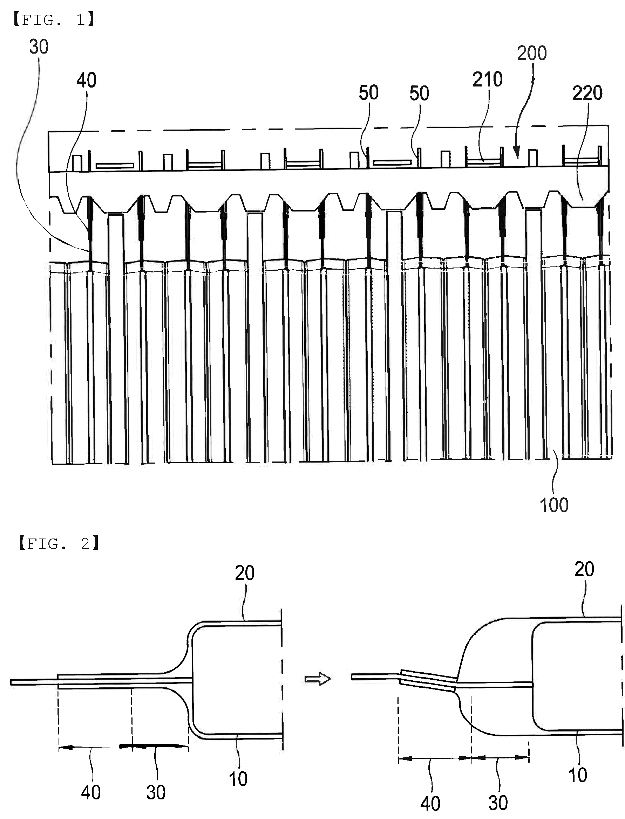

FIG. 1 is a partial enlarged sectional view of a conventional battery module, and FIG. 2 is a view illustrating the case in which gas is generated in a pouch-shaped battery cell received in the conventional battery module.

Referring to FIGs. 1 and 2, a plurality of pouch-shaped battery cells 100 received in a module case (not shown) is electrically connected to a busbar 210 provided at an ICB assembly 200.

When gas is generated in the pouch-shaped battery cell 100, causing an increase in internal pressure of the pouch-shaped battery cell, a receiving portion 20 configured to receive an electrode assembly and a terrace portion 30 forming an edge of the receiving portion 20 may swell, whereby a sealed portion 40 may be damaged, for example deformed.

In this regard, Patent Document 1 relates to a pouch-shaped battery cell including a sealed portion venting control means, wherein a venting control means is provided at a sealed portion of a pouch-shaped battery case in a direction in which an electrode lead protrudes, and the venting control means controls opening and closing of the sealed portion according to the pressure of gas in the pouch-shaped battery case.

In Patent Document 1, a separate means configured to control the opening and closing of the sealed portion is employed, wherein sealing of the opening and closing means is maintained by physical pressing, rather than general thermal pressing. Using the venting control means requires individual, precise mechanical design for each pouch-shaped battery case, considering material, strength, etc.

Patent Document 2 includes a guard unit installed face-to-face on at least a part of a terrace portion of a battery cell and at least a part of a sealed portion of the battery cell so as to delay damage to the sealed portion of the battery cell. The guard unit of Patent Document 2 has a shape facing at least half of the total length of the terrace portion and the sealed portion in a longitudinal direction of the battery cell.

In Patent Document 2, the guard unit is limited to facing at least half of the total length of the terrace portion and the sealed portion, aligning with the common sense that supporting force increases when physically supporting a larger part.

However, adding the guard unit according to Patent Document 2 limits the swelling volume of the terrace portion, etc., thereby reducing the total volume available for swelling. That is, the limited total volume may cause the internal pressure of the battery cell to increase more rapidly.

### (Prior Art Documents)

(Patent Document 1) Korean Patent Application Publication No. 10-2022-0163090
(Patent Document 1) Korean Registered Patent Publication No. 10-2450176

### [Disclosure]

### [Technical Problem]

The present invention has been made in view of the above problems, and it is an object of the present invention to provide a battery module capable of effectively preventing or delaying damage to a sealed portion when a pouch-shaped battery cell swells and minimizing an increase in pressure in the pouch-shaped battery cell.

### [Technical Solution]

As a technical means for achieving the above object, a battery module according to an embodiment of the present invention includes a plurality of pouch-shaped battery cells, each of the pouch-shaped battery cells including an electrode assembly (10), a receiving portion (20) configured to receive the electrode assembly (10), a terrace portion (30) forming an edge of the receiving portion (20), and a sealed portion (40) located outside the terrace portion (30), wherein a guide portion (70) having a predetermined shape is interposed between the pouch-shaped battery cells (100), and one side of the guide portion (70) is located so as to extend to the vicinity of the sealed portion (40).

Also, in the battery module according to the embodiment of the present invention, the one side of the guide portion (70) may extend to the boundary point between the sealed portion (40) and the terrace portion (30).

Also, in the battery module according to the embodiment of the present invention, the guide portion (70) may be disposed relative to the sealed portion (40) in a direction in which an electrode lead (50) of the pouch-shaped battery cell (100) protrudes.

Also, in the battery module according to the embodiment of the present invention, the guide portion (70) may be disposed relative to one surface and/or the other surface of the sealed portion (40).

Also, in the battery module according to the embodiment of the present invention, the distance (h) between one surface of the guide portion (70) facing the sealed portion (40) and one surface of the sealed portion (40) may be less than the depth (H) of the receiving portion.

Also, in the battery module according to the embodiment of the present invention, a corner portion (71) of the guide portion (70) may have a round shape with a predetermined radius of curvature.

Also, in the battery module according to the embodiment of the present invention, the guide portion (70) may be disposed between sealed portions (40) of a pair of pouch-shaped battery cells (100) located adjacent to each other.

Also, in the battery module according to the embodiment of the present invention, the guide portion (70) may simultaneously face the sealed portions (40) of the pair of pouch-shaped battery cells (100) located adjacent to each other.

Also, in the battery module according to the embodiment of the present invention, the guide portion (70) may have a hexahedral shape.

In addition, the present invention provides a battery pack including the battery module.

In addition, the present invention provides a device including the battery module.

### [Advantageous Effects]

As is apparent from the above description, in a battery module according to the present invention, one side of a guide portion extends to the vicinity of a sealed portion, whereby it is possible to effectively prevent or delay damage to the sealed portion.

In addition, the guide portion extends to the vicinity of the boundary between the sealed portion and a terrace portion, whereby it is possible to secure space for a pouch-shaped battery cell to swell when gas is generated in the pouch-shaped battery cell, and therefore it is possible to minimize an increase in pressure in the pouch-shaped battery cell.

### [Description of Drawings]

FIG. 1 is a partial enlarged sectional view of a conventional battery module.
FIG. 2 is a view illustrating the case in which gas is generated in a pouch-shaped battery cell received in the conventional battery module.
FIG. 3 is a plan view illustrating a pouch-shaped battery cell.
FIG. 4 is a partial enlarged sectional view of a battery module according to an embodiment of the present invention.
FIG. 5 is a partial cutaway perspective view of the battery module cut according to the embodiment of the present invention.
FIG. 6 is a conceptual view illustrating a guide portion constituting the battery module according to the embodiment of the present invention.
FIG. 7 is an exploded perspective view of a test unit for simulating the swelling of a pouch-shaped battery cell.
FIG. 8 is an assembled perspective view of the test unit for simulating the swelling of a pouch-shaped battery cell.
FIG. 9 is a schematic view illustrating the swelling of an airbag model according to an embodiment of the present invention.
FIG. 10 shows simulation results for a pouch-shaped battery cell received in the battery module according to the embodiment of the present invention.
FIG. 11 shows simulation results for a pouch-shaped battery cell received in a battery module according to Comparative Example 1.
FIG. 12 is a conceptual view illustrating a guide portion extending to a terrace portion of a pouch-shaped battery cell, as Comparative Example 2.
FIG. 13 is partial cutaway perspective view of a battery module provided with the guide portion shown in FIG. 12.
FIG. 14 shows simulation results for a pouch-shaped battery cell received in a battery module according to Comparative Example 2.
FIG. 15 is a conceptual view of a modified guide portion according to an embodiment of the present invention.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a battery module according to the present invention will be described.

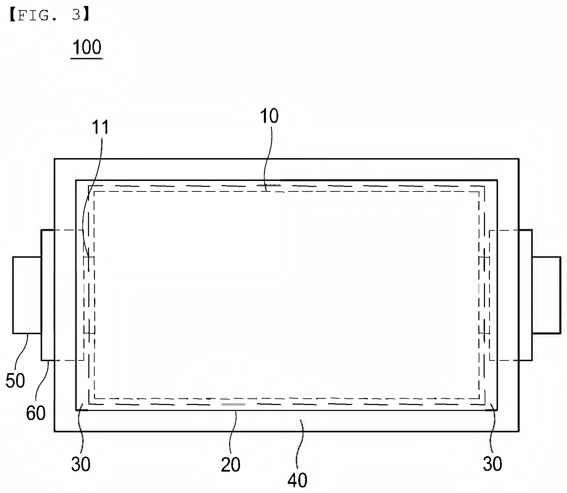

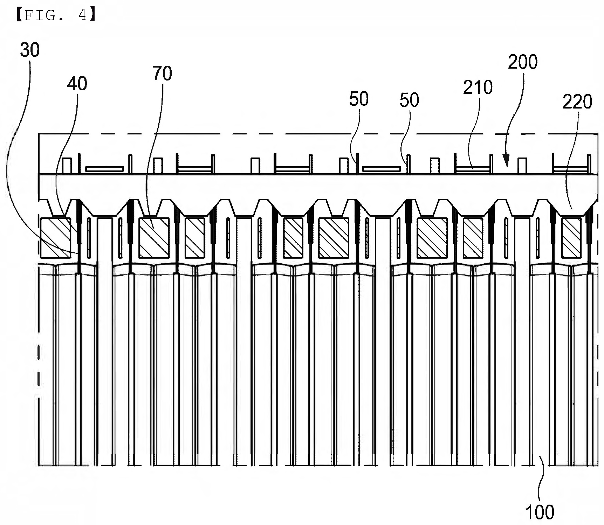

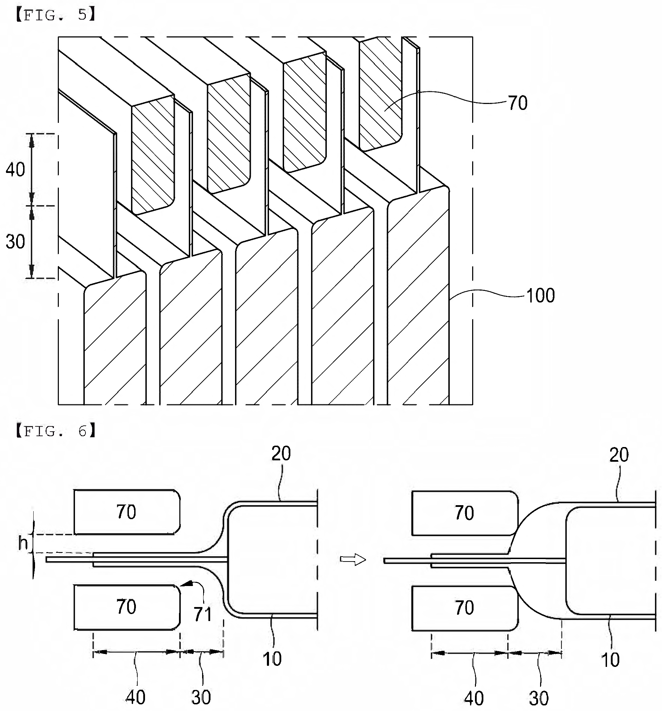

FIG. 3 is a plan view illustrating a pouch-shaped battery cell, and FIG. 4 is a partial enlarged sectional view of a battery module according to an embodiment of the present invention. In addition, FIG. 5 is a partial cutaway perspective view of the battery module cut according to the embodiment of the present invention, and FIG. 6 is a conceptual view illustrating a guide portion constituting the battery module according to the embodiment of the present invention. In FIG. 5, a terrace portion 30 and a sealed portion 40 of a pouch-shaped battery cell 100 are shown for explanation, while an electrode lead is not shown.

Referring to FIGs. 3 to 6, the battery module according to the embodiment of the present invention includes a plurality of pouch-shaped battery cells 100, a module case (not shown), an ICB assembly 200, and a guide portion 70.

First, the pouch-shaped battery cell 100 includes an electrode assembly 10, a receiving portion 20 configured to receive the electrode assembly 10, a terrace portion 30 forming an edge of the receiving portion 20, and a sealed portion 40 located outside the terrace portion 30.

The electrode assembly 10 may be a jelly-roll type assembly, which is configured to have a structure in which a long sheet type positive electrode and a long sheet type negative electrode are wound in the state in which a separator is interposed therebetween, a stacked type assembly including unit cells, each of which is configured to have a structure in which a rectangular positive electrode and a rectangular negative electrode are stacked in the state in which a separator is interposed therebetween, a stacked and folded type assembly, which is configured to have a structure in which unit cells are wound using a long separation film, or a laminated and stacked type assembly, which is configured to have a structure in which battery cells are stacked in the state in which a separator is interposed therebetween and are then attached to each other. In general, the stacked type electrode assembly is used in the pouch-shaped battery cell 10.

An electrode tab 11 of the electrode assembly 10 is electrically connected to an outwardly protruding electrode lead 50. A separate lead film 60 for adhesion is provided between the electrode lead 50 and/or an outwardly protruding part of the electrode tab 10 and the sealed portion 40.

The electrode assembly 10 is received in a pouch-shaped battery case. The receiving portion 20, the terrace portion 30, and the sealed portion 40 correspond to the pouch-shaped battery case. The pouch-shaped battery case is generally configured to have a laminate sheet structure including an inner layer, a metal layer, and an outer layer. The inner layer is disposed in direct contact with the electrode assembly, and therefore the inner layer must exhibit high insulation properties and high electrolytic resistance. In addition, the inner layer must exhibit high sealability in order to hermetically seal the battery case from the outside, i.e. a thermally-bonded sealed portion between inner layers must exhibit excellent thermal bonding strength.

The inner layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability. However, the present invention is not limited thereto, and polypropylene, which exhibits excellent mechanical properties, such as tensile strength, rigidity, surface hardness, and impact resistance, and excellent chemical resistance, is most preferably used.

The metal layer, which is disposed so as to abut the inner layer, corresponds to a barrier layer configured to prevent moisture or various kinds of gas from permeating into the battery from the outside. An aluminum thin film, which is lightweight and easily shapeable, may be used as a preferred material for the metal layer.

The outer layer is provided on the other surface of the metal layer. The outer layer may be made of a heat-resistant polymer that exhibits excellent tensile strength, resistance to moisture permeation, and resistance to air transmission such that the outer layer exhibits high heat resistance and chemical resistance while protecting the electrode assembly. As an example, the outer layer may be made of nylon or polyethylene terephthalate; however, the present invention is not limited thereto.

The sealed portion 40 is formed at an outer periphery of the battery case in order to hermetically seal the battery case after the electrode assembly 10 is received in the battery case.

The pouch-shaped battery cell 100 generally includes an electrode lead 50 constituted by a pair of a positive electrode lead and a negative electrode lead. The electrode lead 50 is joined to the electrode tab 11 of the electrode assembly 10 by welding, and a part of the electrode lead protrudes outwards from the battery case so as to be electrically connected to another battery cell or devices when the electrode assembly is received in the battery case.

The positive electrode lead and the negative electrode lead may protrude in various directions. For example, the positive electrode lead and the negative electrode lead may protrude in opposite directions, or the positive electrode lead and the negative electrode lead may protrude in the same direction. FIGs. 3 to 6 show that the electrode leads 50 are provided on both sides of the electrode assembly 10, but both the electrode leads 50 may be provided on one side of the electrode assembly 10.

In addition, the lead film 60 may be used in order to improve sealing between the electrode lead 130 and the battery case; however, the present invention is not limited thereto.

The pouch-shaped battery cell 100 is manufactured by receiving the electrode assembly in the pouch case, injecting an electrolyte into the pouch case, and sealing the pouch case. In general, the sealed portion 40 may be generally formed on edges of three or four sides of the pouch-shaped battery cell 100, including the part from which the electrode lead protrudes.

The module case (not shown) receives the plurality of pouch-shaped battery cells 100 and protects the same from external impact, etc., and various known module cases may be used.

The interconnect board (ICB) assembly 200 generally includes a busbar 210, and the electrode lead 50 of the pouch-shaped battery cells is electrically connected to the busbar 210. In addition, the interconnect board assembly functions to transmit various electric signals corresponding to the temperature, the voltage, etc. of the pouch-shaped battery cell 100 to a battery management system (BMS) during charging and discharging of the pouch-shaped battery cell 100.

The electrode lead 50 is connected to the busbar 210 through a slit (not shown) formed in the ICB assembly 200. A protrusion 220 may be formed on the ICB assembly 200 so as to protrude toward the pouch-shaped battery cell 100, and the protrusion may be provided to distinguishably install the pouch-shaped battery cell 100 or to prevent short circuit between electrode leads 50.

The guide portion 70 may be located in the module case (not shown), may have a predetermined shape, such as a hexahedral shape, and may be interposed between the plurality of pouch-shaped battery cells 100. The guide portion 70 may be disposed so as to face the sealed portion 40 of the pouch-shaped battery cell 100, and may be located relative to the sealed portion 40 in the direction in which the electrode lead 50 of the pouch-shaped battery cell 100 protrudes.

That is, the guide portion 70 may be located between sealed portions 40 of pouch-shaped battery cells 100 located so as to be adjacent to each other. Accordingly, the guide portion 70 may simultaneously face the sealed portion 40 of the pouch-shaped battery cell 100 and a sealed portion 40 of a pouch-shaped battery cell 100 adjacent thereto.

At this time, the guide portion 70 may be located relative to the sealed portion 40 located on one side from which the electrode lead 50 of the pouch-shaped battery cell 100 protrudes, and one side of the guide portion 70 (at the 3 o'clock position in FIG. 6) may be located so as to extend to the vicinity of the sealed portion 40. In other words, one side of the guide portion 70 may extend to the vicinity of the boundary point between the sealed portion 40 located on one side from which the electrode lead 50 of the pouch-shaped battery cell 100 protrudes and the terrace portion 30.

Since the sealed portion 40 and the terrace portion 30 of the pouch-shaped battery cell 100 are continuously connected, the guide portion 70 may be provided so as to extend to one end of the sealed portion 40, which is a sealed region of the battery case, and to extend only to the boundary between the sealed portion 40 and the terrace portion 30.

The terrace portion 30 is not fused by sealing, and therefore the battery cases of the terrace portion 30 may not be in tight contact with each other. Under a normal condition in which no gas is generated in the pouch-shaped battery cell 100, the battery cases of the terrace portion may be maintained in almost tight contact with each other. However, when gas is generated inside the pouch-shaped battery cell 100, the terrace portion 30 may swell due to the generated gas.

Referring to FIG. 6, gas generated in the pouch-shaped battery cell 100 causes even swelling of the terrace portion 30; however, the sealed portion 40 may remain sealed due to the guide portion 70.

The guide portion 70 may be disposed on one side (at the 12 o'clock position in FIG. 6) and the other side (at the 6 o'clock position in FIG. 6) of the pouch-shaped battery cell 100. Although not shown in the figures, the guide portion 70 may be disposed only on the part at which the receiving portion 20 is formed. That is, if the receiving portion 20 is formed only on one side, the guide portion 70 may be disposed only on one surface of the pouch-shaped battery cell 100 where the receiving portion 20 is formed. If the receiving portion 20 is formed on one side and the other side, the guide portion 70 may be disposed on both surfaces of the pouch-shaped battery cell 100.

The distance h between one surface of the guide portion 70 facing the sealed portion 40 and one surface of the sealed portion 40 may be set to be less than the depth H of the receiving portion. In this case, it is preferable for one surface of the guide portion 70 and one surface of the sealed portion 40 not to be in tight contact with each other. That is, the distance h between one surface of the guide portion and one surface of the sealed portion may be set to greater than 0 mm.

Accordingly, even if heat is generated in the pouch-shaped battery cell 100, the generated heat may be easily discharged through the gap between one surface of the guide portion and one surface of the sealed portion.

In addition, the guide portion 70 may have a constant thickness and height relative to the sealed portion 40 such that the distance h between one surface of the guide portion surface and one surface of the sealed portion can be maintained uniform.

A corner portion 71 of one side of the guide portion 70 facing the receiving portion 20 may have a round shape with a predetermined radius of curvature. For example, the corner portion 71 of the guide portion 70 may be formed in a round shape such that the terrace portion 30 and the corner portion 71 of the guide portion 70 come into contact each other to prevent damage to the battery case when gas generated in the pouch-shaped battery cell 100 swells even the terrace portion 30.

For example, the guide portion 70 may be individually provided and disposed so as to be interposed between the plurality of pouch-shaped battery cells 100. As another example, the guide portion 70 may be formed so as to further extend from the protrusion 220 provided on the ICB assembly 200. In other words, the guide portion 70 may be formed so as to extend from the protrusion 220 of the ICB assembly 200 in a direction in which the pouch-shaped battery cell 100 is located, and in this case, the guide portion 70 may extend to the boundary between the sealed portion 40 and the terrace portion 30.

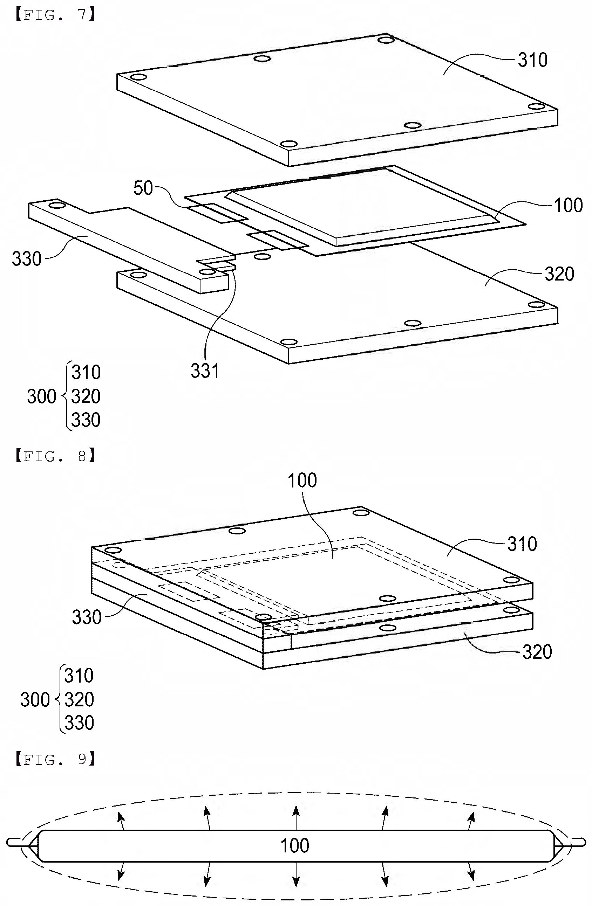

FIG. 7 is an exploded perspective view of a test unit for simulating the swelling of a pouch-shaped battery cell, and FIG. 8 is an assembled perspective view of the test unit for simulating the swelling of a pouch-shaped battery cell. The test unit 300 simulated a pouch-shaped battery cell 100 and a guide portion 70 disposed in a battery module in order to simulate the stress on the sealed portion 40 caused by the swelling of the pouch-shaped battery cell 100.

At this time, simulation was performed using a unidirectional battery cell having an electrode lead 50 provided on one side of an electrode assembly 10 as the pouch-shaped battery cell 100.

The test unit 300 includes a first plate 310 located above the pouch-shaped battery cell 100, a second plate 320 located under the pouch-shaped battery cell 100, and a guide plate 330 configured to simulate the guide portion 70.

Referring to FIGs. 7 and 8, the pouch-shaped battery cell 100 is disposed between the first plate 310 and the second plate 320, each of which is not deformed, and the guide plate 330 has an extension portion 331 protruding in a direction toward the sealed portion 40 of the pouch-shaped battery cell 100. The extension portion 331 may be provided in a pair so as to be located above and under the sealed portion 40 and/or the terrace portion 30 while being spaced apart from each other by a predetermined distance, and may have formed therein a space (e.g., a slit) configured to receive an electrode lead.

The test unit 300 may be assembled by fixing four corners and two side centers of the first plate 310 and the second plate 320. In the state in which the test unit 300 is assembled, the distance between the first plate 310 and the second plate 320 is equal to the thickness of the pouch-shaped battery cell 100. In addition, it is preferable for each of the first plate 310 and the second plate 320 to have a sufficient size to press the entire area of the pouch-shaped battery cell 100 in the state in which the first plate and the second plate are coupled to each other and assembled.

When the thickness of the pouch-shaped battery cell 100 is set to 8.6 mm, the distance between the first plate 310 and the second plate 320 may be 8.6 mm, and therefore the thickness of the guide plate 330 interposed between the first plate 310 and the second plate 320 may also be 8.6 mm.

In addition, at this time, the pair of extension portions 331 may each be set to have a thickness of about 2.3 mm and may be disposed spaced apart from the sealed portion 40 by a predetermined distance.

FIG. 9 is a schematic view illustrating the swelling of an airbag model according to an embodiment of the present invention, wherein the section of the pouch-shaped battery cell is shown, and a dotted line indicates the swelled state of the pouch-shaped battery cell 100. The swelling of the pouch-shaped battery cell shown in FIG. 9 was shown using an airbag model in LS-DYNA. Here, LS-DYNA is a finite element analysis (FEA) program specialized for crash, fracture, and large deformation analysis, which is known in the art; therefore, a detailed description thereof will be omitted.

The condition for rupture of a battery case of the pouch-shaped battery cell for the swelling simulation of the pouch-shaped battery cell may be 55.4%, while the condition for fracture of the sealed portion may be 5.07%.

In other words, a pouch-shaped battery cell 100 configured such that the battery case ruptures when the strain reaches 55.4% and the sealed portion 40 fractures when the principal plastic strain reaches 5.07% was used as the pouch-shaped battery cell 100 prepared for the swelling simulation of the pouch-shaped battery cell.

Furthermore, the pouch-shaped battery cell 100 used for the swelling simulation of the pouch-shaped battery cell has a width of 150 mm, a length of 137.5 mm, and a thickness of 8.6 mm. At this time, the length of the sealed portion 40 in the direction in which the electrode lead 50 protrudes is 5.5 mm, and the length of the terrace portion 30 is 12.45 mm.

For the swelling simulation of the pouch-shaped battery cell, gas was intentionally injected into the pouch-shaped battery cell 100 to swell the pouch-shaped battery cell, and a test was conducted.

Of course, it is also possible to swell the pouch-shaped battery cell 100 by applying power to the electrode lead 50.

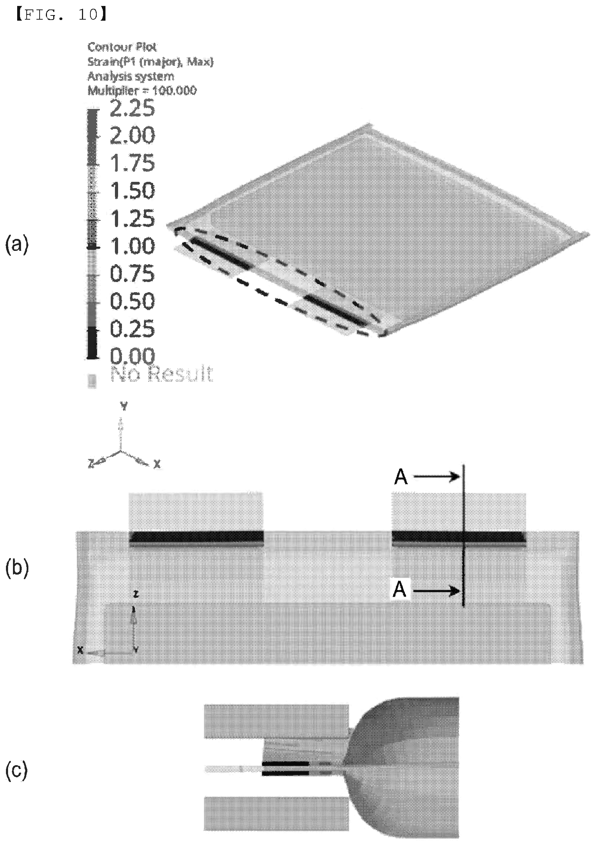

FIG. 10 shows simulation results for a pouch-shaped battery cell received in the battery module according to the embodiment of the present invention, wherein (a) is a contour plot showing the stress applied to the sealed portion when the pouch-shaped battery cell swells, (b) is an enlarged view of the vicinity of the sealed portion when viewed from above, and (c) is a sectional view taken along line A-A.

It can be seen from FIG. 10 that the stress of the sealed portion is low even when the interior of the pouch-shaped battery cell swells. Of course, the extension portion 331 of FIG. 7 is located so as to extend only to the boundary between the sealed portion and the terrace portion, and therefore internal swelling proceeds to the terrace portion.

That is, as shown in FIG. 10, in the pouch-shaped battery cell, the stress of the sealed portion may be minimized by the extension portion 331, and the fracture time of the sealed portion may be delayed due to internal swelling of the terrace portion.

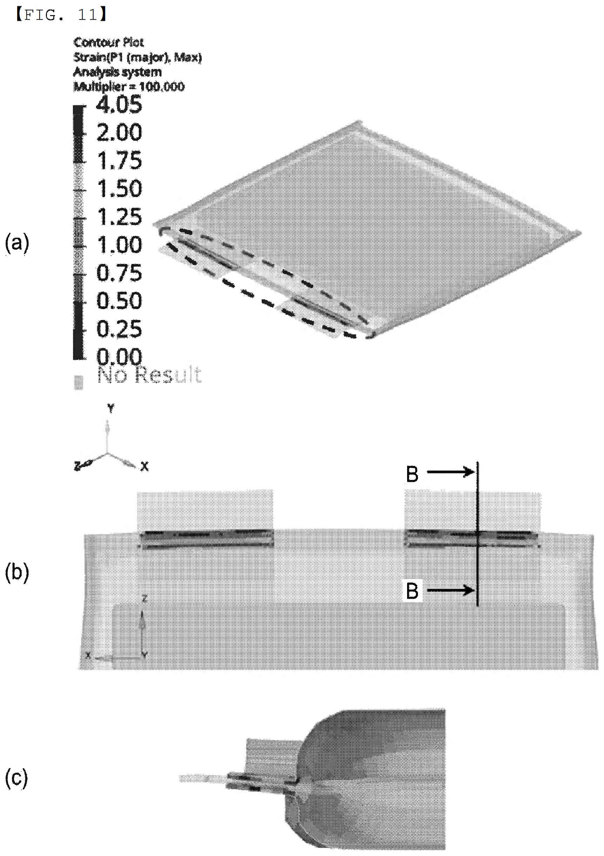

FIG. 11 shows simulation results for a pouch-shaped battery cell received in a battery module according to Comparative Example 1, wherein (a) is a contour plot showing the stress applied to a sealed portion when the pouch-shaped battery cell swells, (b) is an enlarged view of the vicinity of the sealed portion when viewed from above, and (c) is a sectional view taken along line B-B.

FIG. 11 shows the results of an experiment conducted without installing the guide plate 330 constituting the test unit of FIG. 7. As can be seen from FIG. 11, since no extension portion is provided at the vicinity of the sealed portion of the pouch-shaped battery cell, a part of the sealed portion fractures due to the swelling of the pouch-shaped battery cell, and significant stress is applied to the remaining sealed portion.

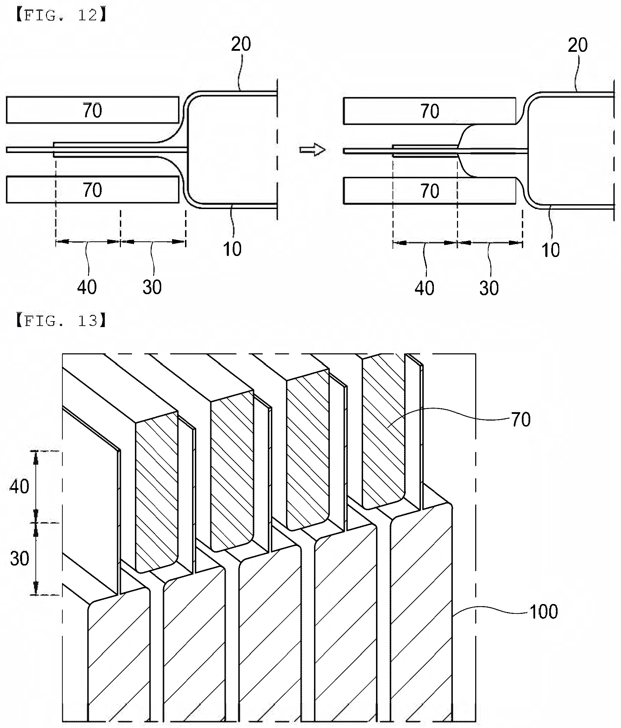

FIG. 12 is a conceptual view illustrating a guide portion extending to a terrace portion of a pouch-shaped battery cell, as Comparative Example 2, and FIG. 13 is partial cutaway perspective view of a battery module provided with the guide portion shown in FIG. 12.

Referring to FIGs. 12 and 13, in Comparative Example 2, the guide portion 70 is located so as to extend to the terrace portion of the pouch-shaped battery cell.

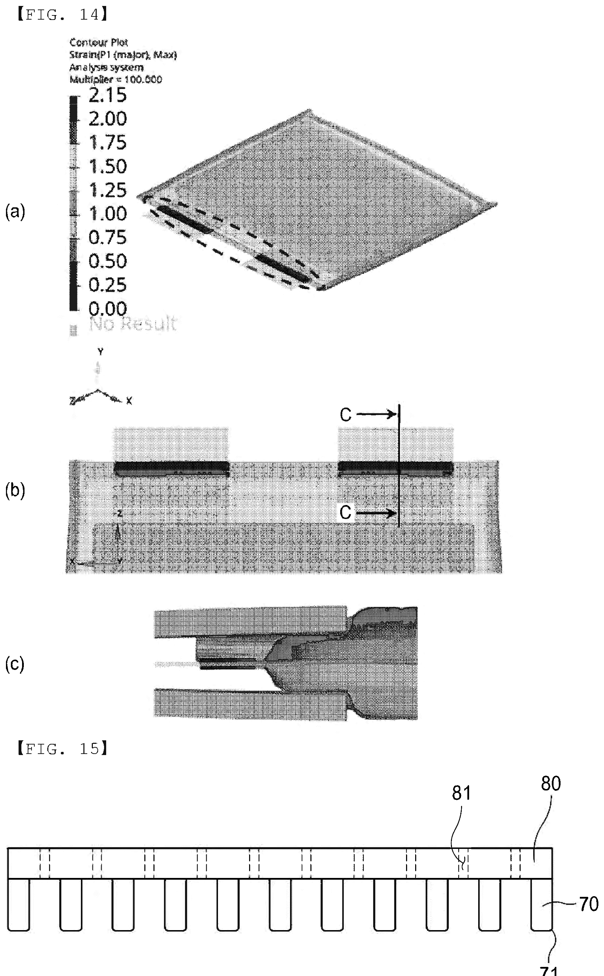

FIG. 14 shows simulation results for a pouch-shaped battery cell received in a battery module according to Comparative Example 2, wherein (a) is a contour plot showing the stress applied to a sealed portion when the pouch-shaped battery cell swells, (b) is an enlarged view of the vicinity of the sealed portion when viewed from above, and (c) is a sectional view taken along line C-C.

Referring to FIG. 14, it can be seen that the extension portion 331 is located so as to extend to the terrace portion, whereby the stress of the sealed portion is reduced.

However, extension of the extension portion 331 to the terrace portion restricts the swelling of the terrace portion, which may cause the pressure caused by gas generated in the pouch-shaped battery cell to increase more rapidly, whereby the time required to reach rupture of the sealed portion may be shortened.

In addition, when the guide portion extends to the terrace portion beyond the sealed portion, there is a risk that the guide portion may damage or press the electrode assembly, including the battery case. Furthermore, when a plurality of pouch-shaped battery cells is mounted in the battery module in a state of being received in a module case (not shown), the protruding heights of electrode leads may be different from each other, in which case the electrode leads may be damaged by the guide portion.

In contrast, in the present invention, since the guide portion extends only to the sealed portion, there is spatial clearance between the terrace portion and the electrode assembly, reducing the risk of the aforementioned problems occurring. In other words, in the battery module according to the present invention, the guide portion extends only to the vicinity of the sealed portion, whereby spatial clearance is provided between the terrace portion and the electrode assembly, and therefore it is possible to prevent damage to the pouch-shaped battery cell when the same is received in the module case.

Furthermore, in the present invention, it is possible to minimize the stress applied to the sealed portion by the guide portion during internal swelling of the pouch-shaped battery cell while not restricting the swelling of the terrace portion, whereby it is possible to delay the rupture time of the sealed portion due to the swelling of the terrace portion.

FIG. 15 is a conceptual view of a modified guide portion according to an embodiment of the present invention.

Referring to FIG. 15, the guide portion 70 constituting the battery module according to the embodiment of the present invention may be disposed so as to be interposed between a plurality of pouch-shaped battery cells, but corresponding sides (at the 12 o'clock position in FIG. 15) of a plurality of guide portions 70 may be connected to each other via a connection member 80. In this case, a plurality of slits 81 configured to allow electrode leads of the pouch-shaped battery cells to extend therethrough may be formed in the connection member 80.

In addition, the guide portion 70 may be spaced apart from the connection member 80 by a predetermined distance. Here, it is obvious that the predetermined distance can be set considering the distance between one surface of the guide portion and one surface of the sealed portion.

A battery pack according to an embodiment of the present invention may include the battery module according to the embodiment of the present invention. The battery pack may include the battery module and a pack case (not shown) configured to receive the battery module.

In addition, a device according to an embodiment of the present invention may include the battery module according to the embodiment of the present invention.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

| | | | |
|---|---|---|---|
| 10: | Electrode assembly | 11: | Electrode tab |
| 20: | Receiving portion | | |
| 30: | Terrace portion | | |
| 40: | Sealed portion | | |
| 50: | Electrode lead | | |
| 60: | Lead film | | |
| 70: | Guide portion | 71: | Corner portion |
| 80: | Connection member | 81: | Slit |
| 100: | Pouch-shaped battery cell | | |
| 200: | ICB assembly | | |
| 210: | Busbar | 220: | Protrusion |
| 300: | Test unit | | |
| 310: | First plate | | |
| 320: | Second plate | | |
| 330: | Guide plate | 331: | Extension portion |
| H: | Depth of receiving portion | | |
| h: | Distance between one surface of guide portion and one surface of sealed portion | | |

## Claims

1. A battery module comprising a plurality of pouch-shaped battery cells, each of the pouch-shaped battery cells comprising an electrode assembly, a receiving portion configured to receive the electrode assembly, a terrace portion forming an edge of the receiving portion, and a sealed portion located outside the terrace portion, wherein
a guide portion having a predetermined shape is interposed between the pouch-shaped battery cells, and
one side of the guide portion is located so as to extend to a vicinity of the sealed portion.

2. The battery module according to claim 1, wherein the one side of the guide member extends to a boundary point between the sealed portion and the terrace portion.

3. The battery module according to claim 2, wherein the guide portion is disposed relative to the sealed portion in a direction in which an electrode lead of the pouch-shaped battery cell protrudes.

4. The battery module according to claim 3, wherein the guide portion is disposed relative to one surface and/or the other surface of the sealed portion.

5. The battery module according to claim 2, wherein a distance between one surface of the guide portion facing the sealed portion and one surface of the sealed portion is less than a depth of the receiving portion.

6. The battery module according to claim 2, wherein a corner portion of the guide portion has a round shape with a predetermined radius of curvature.

7. The battery module according to claim 2, wherein the guide portion is disposed between sealed portions of a pair of pouch-shaped battery cells located adjacent to each other.

8. The battery module according to claim 7, wherein the guide portion simultaneously faces the sealed portions of the pair of pouch-shaped battery cells located adjacent to each other.

9. The battery module according to claim 2, wherein the guide portion has a hexahedral shape.

10. A battery pack comprising the battery module according to any one of claims 1 to 9.

11. A device comprising the battery module according to any one of claims 1 to 9.
